# NEW EUROPEAN PATENT SPECIFICATION

(11) **EP 0 610 649 B2**
(45) Date of publication and mention of the opposition decision: **08.12.1999**
(45) Mention of the grant of the patent: 23.10.1996
(21) Application number: 94100066.3
(22) Date of filing: 04.01.1994
(51) Int. Cl.: A23C 9/127

(54) **Method for the production of yoghurt**
Verfahren zur Joghurtherstellung
Procédé de préparation de yaourt

(30) Priority: 08.01.1993 JP 157593
(43) Date of publication of application: 17.08.1994
(73) Proprietor: Ajinomoto Co., Inc., Tokyo 104 (JP)
(72) Inventor: Ishii, Chiho, c/o Food Prod. Dev. Lab., Kawasaki-shi, Kanagawa (JP); Soeda, Takahiko, c/o Food Prod. Dev. Lab., Kawasaki-shi, Kanagawa (JP); Yamazaki, Katsutoshi, c/o Food Prod. Dev. Lab., Kawasaki-shi, Kanagawa (JP)
(74) Representative: Strehl Schübel-Hopf & Partner

(56) References cited:
- EP-A- 0 379 606
- WO-A-89/00011
- WO-A-93/19610
- JOURNAL OF FOOD SCIENCE vol. 57, no. 5 , 1992 , CHICAGO US M. NONAKA ET AL. 'Sodium caseinate and skim milk gels formed by incubation with microbial transglutaminase'
- "Levnedsmiddeltabeller" af Anders, Moller, 4. reviderede udgave v. Erling Saxholt (1966), english translation
- "Yoghurt, Science and Technology", p. 5, 261-265 (1985, 1989)
- "Viscoelastic properties of milk during yoghurt fermentation", Rheology, October 1991
- Yo-Flex TM, a brochure of the Danish company Chr. Hansen 0396
- "Karakterisering af yoghurtgeler", 1990-2103, Hoveddel 1990
- Heertje et al, Food microstructure 4, i.a. p. 267-277
- The Royal veterinary and agricultural University "Characterization of stirred joghurt by rheology, microscopy and sensory analysis", 1995, i.a. p. 1-9
- Bekendtgorelse om maekeprodukter m.y. nr 902 af 29, 1993, kapitel 10 Food Technology in Australia, vol. 35(9), 420-423 (1983)
- J. Agric. Food Chem., vol. 40, 1101-1107 (1992)
- Product sheet Ajinomoto Co's transglutaminase
- Product application sheet, transglutaminase, Ajinomoto
- Fundamentals of Dairy Chemistry, The Avi Publishing Company Inc. Westport, Connecticut (1965)

## Description

### BACKGROUND OF THE INVENTION

### Field of the Invention:

The present invention relates to a method for the production of a smooth yogurt which exhibits no water separation.

### Discussion of the Background:

Yogurt is a fermented milk product which has been consumed since ancient times, and in some countries, even mountain sheep milk and ewe milk are used as the raw materials. Yogurt is basically produced by contacting milk with a lactic starter, pouring it into a container for fermentation and for distribution, such as a bottle or carton, and allowing it to harden to a pudding form (hard type). Such a yogurt is a product with an acid-sweet taste.

Alternatively, instead of pouring directly into a distribution container and fermenting, yogurt is often crushed after fermentation, then placed into a container for distribution as a product (soft type). Sweeteners (e.g., sugar [sucrose]), acidifiers, flavorings, oligosaccharides, emulsifiers or other desired materials are added to yogurt during its production. Yogurt produced without the addition of such additives is called "plain type." Alternatively, fruit (pulp or juice), starch or thickening polysaccharides such as xanthan gum, locust bean gum, carrageenan or griloid are added to yogurt during production (fruit type). In the present specification, all of these types of yogurt shall collectively be referred to by the name "yogurt."

All of the types of yogurt often undergo the phenomenon of water separation (separation of the whey) with the passage of time after production, for example, while being distributed. Yogurt which has undergone water separation has a lower commercial value, and in extreme cases, it must be discarded.Thus, a method of preventing water separation in yogurt is needed.

One of the measures used in the past for preventing water separation in yogurt is to add agar, gelatin, pectin or the like to the raw materials. Although agar inhibits water separation, the texture of the yogurt depreciates. That is, the yogurt has the texture of pudding, and the original smooth texture of the yogurt is lost. In addition, the use of agar, gelatin, pectin and the like is disadvantageous from the standpoint of cost.

The prevention of water separation is also achieved by adding defatted powdered milk or the like to the raw material to increase the milk solids content. However, the difficulties of this method include its high cost and the undesirable texture produced thereby.

In addition, the moisture content of the soft type of yogurt is typically the same as milk (for example, 88%). Soft yogurt presents the properties of opalescent, silk-strained bean curd. On the other hand, acid-agglutinated milk is brittle, and becomes semi-fluid upon stirring. Also, if too much moisture stands on the curd, the curd shrinks, and the acidity increases during the distribution process or during preservation, further increasing the acidic taste of the yogurt.

Previous attempts have been made to produce yogurt using the enzyme transglutaminase that catalyzes the gelation reaction. WO-A-9319610 (a document under Art. 54(3)) relates to a process for the preparation of a milk product wherein transglutaminase is added to milk, and wherein simultaneously the pH of the milk is adjusted to a value of between 2.8 and 5.2. The pH adjustment is carried out by adding an acid or by fermentation, in particular by means of a yogurt starter culture. The amount of transglutaminase lies within the limits of 0.01 to 50 units per gram of milk protein. The final fermentation product has the consistency of a semi-solid yogurt.

EP-A-379606 discloses the preparation of a yogurt-like fermented milk product by fermentation of milk with Streptococcus thermophilus in the presence of transglutaminase. The transglutaminase is added in an amount of 0.01 to 2000 units based on 1 g of the protein. Incubation at 5 to 80 °C for 10 seconds to 24 hours gives high molecular weight products or gelation products.

Therefore, it is desirable to develop a method for the production of yogurt by which water separation is prevented and the original texture of the yogurt is maintained.

### SUMMARY OF THE INVENTION

Accordingly, one object of the present invention is to provide a method for the production of yogurt, which prevents water separation in yogurt products such as those mentioned above, while maintaining the original texture of the yogurt.

This object and others, which will become apparent during the following detailed description of the preferred embodiments, are, as a result of much diligent research carried out in order to solve the above-mentioned problems, provided by pretreating raw materials to be used for the production of yogurt with a transglutaminase.

### DETAILED DESCRIPTION OF THE PREFERRED EMBODIMENTS

The present invention therefore relates to a method for the production of yogurt, comprising:
pretreating raw materials comprising milk protein used in the production of yogurt with a transglutaminase,
deactivating said transglutaminase after said pretreatment, and contacting the pretreated raw materials with a lactic starter for fermentation.

Raw materials for the production of yogurt typically include raw milk and dairy products such as skim milk and/or powdered milk (e.g., whole powdered milk, skim milk powder), etc. These raw materials are processed with the addition, as necessary or as desired, of the various additives mentioned above. Also, as described above, the main raw material is sometimes mountain sheep milk or ewe milk. In general, raw materials which comprise milk protein are used in the production of yogurt.

The raw materials which may be used for the production of yoghurt according to the present invention include raw materials which contain commonly known anti-water separation agents, such as agar, pectin, gelatin and the like, as long as they do not give the undesirable texture to produced yoghurt. Pretreatment with a transglutaminase according to the present invention keeps the loss of the yoghurt texture to a minimum and sufficiently prevents water separation to a commercially acceptable level, even when using raw materials which contain a minimal amount of agar or other anti-water-separation agent(s).

According to the present invention, conventional methods of yogurt production (beyond the present pretreating step) may be followed. The composition of the raw materials comprises 8-11 wt% (hereunder, "wt%" shall be abbreviated simply to "%") of non-fat solids, 0-7% of milk fat, and 0.01-5% of sugar and/or a low-calorie sweetener such as aspartame, saccharin, stevioside, etc. Also, the raw materials may be combined with a sugar alcohol such as sorbitol, maltitol, inositol or the like, or with a polysaccharide bulking agent, such as "polydextrose" (Pfizer Co.) or the like.

Furthermore, a thickening stabilizer, such as guam, carrageenan, locust bean gum or the like may be combined with the raw materials in a proportion of 0.1-1.0% by weight of the raw materials. If desired, fruits or flavors may certainly be added thereto. The remaining amount of the raw material is, of course, water.

As described earlier, these types of raw materials for the production of yogurt have previously been contacted immediately with lactic starters for fermentation. A "lactic starter" refers to a starter culture of bacteria conventionally used in the production of yogurt.

According to the present invention, however, pretreatment of such raw materials with a transglutaminase is necessary. As described earlier, any known conditions or process steps for producing yogurt may be employed in the present method without modification, as long as the raw material is first pretreated with a transglutaminase. This applies as well to the lactic acid bacterium used as a lactic starter. Any lactic acid bacterium which has been previously used, such as *Lactobacillus bulgaricus*, *Streptococcus thermophilus* or the like, may be used in the present method.

An explanation will now be provided regarding the treatment with a transglutaminase, which is the most important characteristic of the present invention.

According to the present invention, the treatment with transglutaminase involves, specifically, adding a transglutaminase to the raw materials prior to their contact with the lactic starter, and reacting the transglutaminase with the proteins in the raw materials.

Known transglutaminases which are suitable for use in the present invention include those derived from mammals (see, for example, Japanese Patent Application Publication HEI 1-50382), those derived from fish (see, for example, European Patent Publication No. 0 555 649 A,), those derived from microorganisms (see, for example, Japanese Patent Application Disclosure SHO 64-27471, which corresponds to European Patent Publication No. 0 379 606 A), etc. According to the present invention, a transglutaminase derived from any source may be used.

The amount thereof to be added is the amount which produces the anti-water separating effect in the product. From this standpoint, it is 0.01-100 units (hereunder, "units" shall be abbreviated to "U"), and is preferably 0.1-50 U of transglutaminase per gram of milk protein contained in the raw materials. If the amount added is less than 0.01 U/g, the improvement of the yogurt properties cannot be achieved, and the anti-water-separating effect will be minimal. Also, an amount greater than 100 U/g is not preferable, since the product will harden into a gel form, and the yogurt-like smoothness of the product will be lost.

In order to adequately exhibit the enzymatic effect of the transglutaminase, the raw materials, which are mixed for emulsification after addition of a transglutaminase thereto, are kept for 10-120 minutes under conditions which are optimum for transglutaminase (that is, a pH of 6-7 and a temperature of about 5-65°C, preferably about 40-55°C). In this manner, the enzyme reaction may be sufficiently carried out to achieve the desired anti-water-separation and texture-retaining effects.

The units of activity of transglutaminase according to the present invention are determined in the following manner. A reaction is carried out with benzyloxycarbonyl-L-glutaminylglycine and hydroxylamine as substrates. The resulting hydroxamic acid is allowed to form an iron chelate in the presence of trichloroacetic acid, after which the absorbance at 525 nm is measured. The amount of hydroxamic acid is determined from a corresponding calibration curve to calculate the activity. Refer to the above Japanese Patent Application Disclosure SHO 64-27471 for details of this method.

After the preteatment with transglutaminase in this manner, the transglutaminase is deactivated by a conventional method (for example, by heating the raw materials at about 70°C or higher for a length of time sufficient to deactivate the transglutaminase). This heat deactivation simultaneously serves as a heat sterilization of the raw materials.

After deactivation of the transglutaminase, the raw materials are treated by a conventional method to make a yogurt product. As described earlier, for example, a starter culture is added, and the mixture is poured into a container for distribution. The mixture is fermented for a period of time (for example, about 4 hours) until it reaches an appropriate pH (for example, a pH of from 3 to 6, preferably about 4.65) to make yogurt. Alternatively, instead of fermenting the mixture after pouring into the distribution container, the product may be made by crushing the fermented raw materials, then placing the crushed materials into a container for distribution.

Transglutaminase is an enzyme which catalyzes the acyl transfer reaction of the γ-carboxamide groups of glutamine residues of peptide chains. When the ε-amino group of a lysine residue of a protein functions as the acyl receptor, this transglutaminase causes the formation of ε-(γ-Glu)-Lys cross-linking within the protein molecule and between protein molecules. Also, when water functions as the acyl receptor, the transglutaminase enzyme promotes the reaction by which the glutamine residue is deamidized to become a glutamic acid residue.

According to the present invention, it is thought that the enzyme action of transglutaminase forms a network (gel) both (1) between milk protein molecules and (2) within the milk protein molecules (intermolecular and intramolecular network). As a result, the water separation of yogurt is prevented and a smooth texture is obtained, resulting in an easy disintegration of the yogurt produced by the present method in the mouth.

Other features of the invention will become apparent in the course of the following descriptions of exemplary embodiments which are given for illustration of the invention and are not intended to be limiting thereof.

### Example 1

Unmodified cow milk having a non-fat solids content of 8.3% was used as the raw material. The transglutaminase used was derived from a microorganism (*Streptoverticillium mobaraense* IFO 13819). The transglutaminase was prepared according to the method in Example 1 of the above mentioned Japanese Patent Application Disclosure SHO 64-27471 (specific activity of 1 U/mg).

One kilogram of cow's milk was poured into a 2 L volume beaker. Transglutaminase was added thereto in an amount sufficient to provide a proportion of 10 U of enzyme per gram of milk protein. The temperature of the mixture was maintained at 25°C, and the mixture was stirred for 1 hour. After the mixture was allowed to stand for 1 hour, it was heated to 95°C to deactivate the transglutaminase.

After the temperature reached 95°C, the mixture was immediately cooled to 44°C. A commercially available lactic starter "JOGHURT V2" (product of Wiesby Co.) was added (1.5% with respect to the amount of milk), and fermentation was carried out at 44°C for about 4.5 hours. The pH of the obtained yogurt sample was 4.65.

Another yogurt sample was prepared in exactly the same manner, except that 1 U instead of 10 U of transglutaminase was used per gram of milk protein.

For further comparison, another yogurt sample was prepared in exactly the same manner, except that a transglutaminase was not used.

The water separation rate (weight ratio of separated whey with respect to the total amount of yogurt) after allowing each of the sample products to stand for 3 weeks while cooling (about 15°C) reached 4.5% for the sample with no transglutaminase added (control). On the other hand, the water separation amounts of the 1 U and 10 U samples were 0.2% and 0.3%, respectively, with practically no visible water separation. Even 40 days after production, the effect of the transglutaminase was considerable.

Furthermore, in a sensory (organoleptic) evaluation performed by a professional panel consisting of 20 people, the non-treated sample had some lumps and a rough texture, whereas neither of the 1 U and 10 U samples had lumps, and both had the original smooth texture of yogurt.

### Example 2

Whole fat powdered milk and skim milk powder were used in combination as the raw materials. The same transglutaminase as described in Example 1 was used.

Seventy-eight grams of whole fat powdered milk, 108 g of skim milk powder and 1,820 g of water were poured into a 5 L volume beaker, and stirred to dissolution. The non-fat solids content of this mixture was 8.0%. Transglutaminase was added thereto to a proportion of 1 U per gram of milk protein. The mixture was maintained at 25°C and stirred for 1 hour, immediately after which heating was initiated and then stopped when the temperature of the mixture reached 95°C.

Thereafter, the mixture was cooled to 45°C, and 30 g of the same starter described in Example 1 was added thereto. The mixture was fermented at 44°C for about 3 hours. When the pH reached 4.6, it was cooled to 10°C to obtain yogurt.

Another yogurt sample was prepared in exactly the same manner, except that 10 U instead of 1 U of transglutaminase was used per gram of milk protein. Further, for comparison, another yogurt sample was prepared in exactly the same manner, except that a transglutaminase was not used.

The water separation rate (weight ratio of separated whey with respect to the total amount of yogurt) after allowing each of the sample products to stand for 3 weeks while cooling (about 15°C) was 5.8% for the sample with no transglutaminase added (control), while that of the 1 U sample was 0.4% and that of the 10 U sample was 0.2%, showing that the effect of the transglutaminase in the yogurt products prepared according to the present invention was considerable.

Furthermore, by the results obtained from an organoleptic evaluation by a professional panel consisting of 20 people, the 1 U and 10 U samples according to the present invention had more of the original smooth texture of yogurt than did the control sample.

As mentioned above, according to the present invention, yogurt in which water separation does not occur, and which has the original smooth texture of yogurt may be easily provided.

## Claims

1. A method for the production of yoghurt, comprising:
pretreating raw materials comprising milk protein used in the production of yoghurt with a transglutaminase in an amount of 0.01 to 100 units per gram of milk protein, said raw materials comprising 8 to 11 wt% of non-fat solids, 0 to 7 wt% of milk fat and 0.01 to 5 wt% of sugar and/or a low-calorie sweetener, the residual amount being water,
deactivating said transglutaminase after said pretreatment, and
contacting said pretreated raw materials with a lactic starter for fermentation after deactivating said transglutaminase.

2. The method of claim 1, wherein said transglutaminase is produced by a bacterium belonging to the genus Streptoverticillium.

## Patentansprüche

1. Verfahren zur Herstellung von Joghurt, welches umfaßt:
die Vorbehandlung von Milchprotein enthaltenden Ausgangsmaterialien, die zur Herstellung von Joghurt verwendet werden, mit einer Transglutaminase in einem Anteil von 0,01 bis 100 Einheiten pro Gramm Milchprotein, wobei die Ausgangsmaterialien 8 bis 11 Gew.-% fettfreie Feststoffe, 0 bis 7 Gew.-% Milchfett und 0,01 bis 5 Gew.-% Zucker und/oder eines kalorienarmen Süßmittels, Rest Wasser enthalten,
Desaktivieren der Transglutaminase nach der Vorbehandlung und
Kontaktieren der vorbehandelten Ausgangsmaterialien mit einem Milchsäurestarter, um die Fermentation nach dem Desaktivieren der Transglutaminase durchzuführen.

2. Verfahren gemäß Anspruch 1, wobei die Transglutaminase mit Hilfe eines Bakteriums des Genus Streptoverticillium produziert worden ist.

## Revendications

1. Procédé de production de yaourt, comprenant :
le prétraitement de matières premières comprenant des protéines du lait utilisées dans la production de yaourt par une transglutaminase à raison de 0,01 à 100 unités par gramme de protéines du lait, lesdites matières premières comprenant 8 à 11 % en masse de matières solides n'étant pas de la matière grasse, 0 à 7 % en masse de matière grasse du lait et 0,01 à 5 % en masse de sucre et/ou d'un édulcorant basse calorie, la quantité restante étant de l'eau,
la désactivation de ladite transglutaminase après ledit prétraitement et
la mise en contact desdites matières premières prétraitées avec une culture de bactéries lactiques pour la fermentation après la désactivation de ladite transglutaminase.

2. Procédé selon la revendication 1, dans lequel ladite transglutaminase est produite par une bactérie appartenant au genre Streptoverticillium.
